(19) **Europäisches Patentamt**
**European Patent Office**
**Office européen des brevets**

(11) **EP 4 074 770 A1**

(12) **EUROPEAN PATENT APPLICATION**

(43) Date of publication:
**19.10.2022 Bulletin 2022/42**

(51) International Patent Classification (IPC):
***C08J 11/08*** (2006.01)    *C08L 23/02* (2006.01)

(21) Application number: **21168649.8**

(52) Cooperative Patent Classification (CPC):
**C08J 11/08;** C08J 2323/02

(22) Date of filing: **15.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• OUNI, Tuomas
  06850 Kulloo (FI)
• ALBRECHT, Andreas
  4021 Linz (AT)
• NAGL, Andreas
  4021 Linz (AT)

(74) Representative: **Kador & Partner PartG mbB**
**Corneliusstraße 15**
**80469 München (DE)**

(54) **A PROCESS FOR EXTRACTING POLYMERS FROM WASTE MATERIAL**

(57) The present invention relates to a process for extracting polymers, preferably polyolefins, from polymer-containing waste material comprising the steps of: providing polymer-containing waste material comprising polyolefin material; contacting the polymer-containing waste material with a non-polar solvent (S) comprising at least one hydrocarbon, optionally halogenated hydrocarbon, having from 4 to 10 carbon atoms, to form a composition (C); heating the composition (C) at a dissolution temperature (T) in the range of 135 to 200 °C and a pressure (P) in the range of 0.1 to 5 MPa for a period of from 5 min to 5 h (M), to obtain a solution comprising the solvent (S) and the polyolefin material dissolved in the solvent (S), and an undissolved material (U); separating the undissolved material (U) from the solution; separating the polyolefin material from the solution, and optionally separating the solvent (S) from the solution.

Fig. 1

**Description**

The present invention generally relates to a process for extracting polymers from polymer-containing waste material. In particular, the present invention relates to a process for extracting polyolefins from polymer-containing waste material. The present invention further relates to the polymer material obtainable by the process as well as the use of the polymer material in the manufacture of an article. The present invention further relates to a method for analyzing the content of polymer material in polymer-containing waste material.

**Background**

The challenge of the disposal of accumulated waste plastics and corresponding environmental issues have received widespread attention from the public and professionals. Therefore, besides the concepts of the prevention of plastic waste in general and the prevention of leakage of plastic waste into the environment in particular, recycling of waste plastics material has become an important topic. Waste plastics can be turned into resources for new plastic products. Hence, environmental and economic aspects can be combined in recycling and reusing waste plastics material.

Since the mid-90s, several European countries have begun to implement waste collection systems, which allow more target orientated collection and separation of plastic materials from other waste materials. These systems enable a broad separation of polymer types from each other. In parallel, several plastic recycling processes have been developed, in particular aiming on the increase of product quality of the recyclable polymer materials.

There are different routes of plastic recycling commonly known including mechanical recycling (i.e. material sorting), advanced physical or solvent based recycling and chemical processing (e.g. thermochemical recycling such as pyrolysis or gasification and solvolysis). Among these methods, mechanical recycling and chemical recycling are the most widely practiced.

Nowadays, advanced mechanical recycling includes separation steps such as shredding, vibrating, rotary sieving, advanced sorting methods supported by spectrometric-methods [e.g. NIR/VIS] and wash operations to reduce organic, biologic and partly odor contaminants primary from the surface of the recyclable plastic material, as well as achieving a polymer type enriched and more homogeneous polymer recyclate fraction (e.g. of 85 to 95 wt% of a respective polymer type). However, the product quality remains relatively poor and does not allow for both food contact and use in high performance applications.

The second plastic recycling route is chemical or feedstock recycling, comprising solvolysis and thermochemical processing. This route provides a promising opportunity to recover pre-sorted and pre-treated solid plastic waste to obtain feedstocks for the petrochemical industry, which may be processed to plastics again, as well as to chemical commodities and fuels. To degrade the polymeric structure of the plastic solid mixture to shorter hydrocarbons up to monomeric building blocks, heat, catalysts and solvents have to be applied, such that the total energy input is significantly higher in comparison to virgin polymerization from crude oil. Thus, the main drawbacks are the extravagant and energy-consuming thermal degradation together with $CO_2$-emission.

The third plastic recycling route is advanced physical or "Solvent based Recycling" (SbR). In SbR-processing the polymer is initially dissolved in an appropriate solvent and next either the solubility of the dissolved polymer is decreased by the addition of a non-solvent (dissolution/precipitation) and/or solidification of the polymer is caused by the preferably complete separation of the solvent from the solidified polymer by thermal unit operations (evaporation, drying etc.). The main advantages of SbR-processing can be found in the preservation of the original molecular structure and the mostly relevant properties, density and MFR, for re-processing (compounding, conversion), and in the possibility to separate polymer additives, e.g. fillers, stabilizers, anti-oxidants and/or pigments, to gain a virgin-like high-quality polyolefin, which can be finally adjusted to the desired polyolefin grade by compounding.

EP 3 339 361 (A1) describes a polymer solution recycling process including the step of contacting a waste polymer at a temperature of 140 °C and at a pressure of 6.2 MPa (62 bar) with n-butane. This step is repeated four times to obtain five fractions. The residue of this step is subsequently dissolved again in n-butane at 140 °C and 12.5 MPa (125 bar) by pressurization with nitrogen, to obtain a sixth fraction. Furthermore, settling and removal of non-dissolved polymer is performed and an adsorption step is added using a pure silica bed followed by an aluminum-oxide (zeolite) bed at 140 °C and 12.5 MPa (125 bar). The polymer is then solidified by depressurizing the system to atmospheric pressure for evaporation of the low boiling n-butane solvent. The disadvantage of this process lies in the high pressure processing, which needs experienced staff and causes high investment costs, as the material strength of the plant must be sufficiently dimensioned. A further disadvantage of this process is that it is operated discontinuously. This is in particular problematic as it is generally difficult to design a continuously operated high pressure process.

DE 102016015199 A1 uses a low pressure dissolving process for the separation of post-industrial consumer waste, in particular the separation of polyethylene and polypropylene. Solvent is a higher non-polar gasoline compound (methylcyclohexane) having a boiling point temperatures of 99 °C. The disadvantage of this process is the limitation to the separation of two pure polyolefin types (h-PP and LDPE) from a polymer mixture (in a ratio of 1:1). Further disadvantage of this process is the high residual solvent content in the intermediate polymer product (up to 5 vol.-%). Removing this unwanted solvent requires complex and expensive post-treatment processing e.g. by a gas-dense centrifuge.

Therefore, generally, the polymer dissolution recycling processes and in particular the polyolefin polymer dissolution recycling processes known in the prior art are either high pressure processes having the disadvantage of high costs and efforts or employ solvents causing problems in the after process-treatment in particular as regards solvent removal.

Furthermore, many of the solution recycling processes of polyolefins described in the prior art are designed in a way that no continuous process is possible, for example through the use of high pressure process technique.

It is a general desire of the solution recycling processes of the prior art to provide virgin-like polymers, i.e. polymers that are very similar, ideally identical, in their structures and properties to freshly polymerized polymers. The need for high quality, virgin-like recycled resins is especially important for food and drug contact applications, such as food and drug packaging materials. Therefore, the solution recycling processes of the prior art focus on the complete separation of polymer components from each other.

In view of the increasing accumulation of waste plastics, it becomes more and more an issue, for environmental and economic reasons, to recycle polymers also from waste plastics with low contents of polymers (such as below 70 wt% of polymers or even less). Accordingly, there is a need in the art for methods that sufficiently and on a low-cost basis enrich polymers in plastic waste for further use in the above described recycle techniques.

## Description of the invention

Thus, it is an object of the present invention to provide a process for the enrichment of polymers, in particular polyolefins, from waste sources for further use in polymer recycle processes such as mechanical and chemical recycling and pyrolysis.

It is a further object of the invention to provide a method for analysis of waste samples, in particular to determine the content of the different polymers contained in the waste samples.

The present invention is based on the surprising finding that polymers can efficiently be extracted from waste samples by dissolution at specific conditions. By a particular order of steps, different classes of polymers may be extracted in high purity grades.

Therefore, the present invention provides a process for extracting polymers, preferably polyolefins, from polymer-containing waste material comprising the steps of:

A) providing polymer-containing waste material comprising polyolefin material;

B) contacting the polymer-containing waste material with a non-polar solvent (S) comprising at least one hydrocarbon, optionally halogenated hydrocarbon, having from 4 to 10 carbon atoms, to form a composition (C);

C) heating the composition (C) at a dissolution temperature (T) in the range of 135 to 200 °C and a pressure (P) in the range of 0.1 to 5 MPa for a period of from 5 min to 5 h (M), to obtain a solution comprising the solvent (S) and the polyolefin material dissolved in the solvent (S) and an undissolved material (U);

D) separating the undissolved material (U) from the solution;

E) separating the polyolefin material from the solution, and optionally separating the solvent (S1) from the solution.

Generally, within the meaning of the present invention, unless otherwise indicated, the percentages are weight percentages (wt%), usually based on the total weight of the respective entity.

Further, it should be understood within the meaning of the present invention that the below-described embodiments may be combined.

The process according to the invention is preferably a waste material pre-treatment process for a recycling process of polymer-containing, preferably polyolefin-containing, waste material, wherein the recycling process is preferably selected from mechanical recycling, solvent recycling and chemical recycling.

These processes encompass inter alia hydrocracking, catalytic cracking, steam cracking and gasification, and preferably use enriched and pre-purified polymers (e.g. polyolefins).

By the process according to the present invention, polymers are extracted from polymer-containing waste material by dissolving the polymers from the polymer-containing waste material. Preferably, polyolefins are separated in a first sequence of the process steps comprising steps A to E, which may be the only steps of the process.

The process of the present invention comprises at least steps A to E, which are preferably in a sequential order of steps, as defined above. Although, two or more steps may also be carried out simultaneously or as one single step.

In one embodiment, the steps B and C may be carried out as one step, wherein the polymer-containing waste material is contacted with the solvent at the dissolution temperature (T).

The process may further comprise additional steps, as described below, which may be performed before step A, after step E or in-between any of the steps A to E. In one embodiment, steps A to E are performed sequentially without any additional steps in-between.

The process according to the invention may be operated as a continuous or discontinuous process. In one embodiment, the process is operated as a discontinuous process, preferably wherein the separation step D and/or E and/or the contacting step B are performed as steps of a batch process.

In another embodiment, the process is operated as a continuous process, i.e. a flow process without interruption, wherein the separation step D and/or E and/or the contacting step B are performed directly and without interruption. In a preferred embodiment, the solvent (S) obtained in step E is continuously refed to the step B without interruption.

In step A of the process according to the invention, the polymer-containing waste material preferably comprises from 5 to 90 wt% of polymer material, based on the total weight of the polymer-containing waste material, is provided. More preferably, the polymer-containing waste material comprises from 10 to 80 wt% and most preferably from 10 to 60 wt% of polymer material, based on the total weight of the polymer-containing waste material. Polymer material in the meaning of the invention refers to a material comprising polymers, i.e. large molecules with molecular weights ranging from a few thousand to as high as millions of g/mol and being composed of many repeating units. Usually, the polymer-containing waste material comprises different types of polymer material.

Generally, the polymer material comprises at least one polyolefin (PO) material comprising at least one polyolefin component, preferably, the polyolefin material comprises at least two, more preferably at least three and often up to 20 polyolefin (PO) components. Polyolefin (component) in the meaning of the invention refers to polyethylene and/or polypropylene, in particular comprising homopolymers and copolymers of ethylene and propylene, respectively.

Polyethylene in the meaning of the present invention refers to an ethylene homopolymer and an ethylene copolymer having at least 50 mol%, preferably at least 70 mol% and most preferably at least 90 mol% and up to less than 100 mol% of ethylene units. Other units, preferably other alpha-olefin units, may be contained in the polyethylene. Similarly, polypropylene in the meaning of the present invention refers to a propylene homopolymer and propylene copolymer having at least 50 mol%, preferably at least 70 mol% and most preferably at least 90 mol% and up to less than 100 mol% of propylene units.

The process of the present invention may be used for extraction of polymers from polymer-containing waste material with different contents of polyolefin material. Preferably, the polymer-containing waste material comprises from 10 to 90 wt% of polyolefin material, based on the total weight of the polymer-containing waste material. In one embodiment, the polymer-containing waste material comprises from 70 to 90 wt% or even from 80 to 90 wt% of polyolefin material. In another embodiment, the polymer-containing waste material comprises from 5 to 50 wt%, preferably from 5 to 40 or even from 5 to 30 wt% of polyolefin material.

Preferably, the polymer-containing waste material further comprises at least one non-polyolefin polymer material selected from the group consisting of polystyrene (PS) material, polyethylene terephthalate (PET) material, polyamide (PA) material and polyvinyl chloride (PVC) material. The polymer-containing waste material may further comprise acrylonitrile butadiene styrene (ABS) material, polycarbonate (PC) material, and polyurethane (PUR) material. Each of the above-described polymer materials comprises at least one component of the respective polymer material. They may comprise two, three or more of the respective polymer components, wherein at least one component, preferably all components may be separated from the polymer-containing waste material by the respective embodiments of the present invention.

The polymer-containing waste material may further comprise non-polymer material such as impurities, polymer additives, antioxidants, food residues, textiles, residual perfume components, dyes and pigments, wood, paper and ceramics.

In one embodiment, the polymer-containing waste material is plastic waste, such as plastic waste obtained from plastic waste management sources as e.g. plastic fractions sorted from municipal solid waste, sorted fractions from produces responsibility organization, industrial waste streams including polymer-rich rejects from waste sorting plants.

Further examples of polymer-containing waste material include, but are not limited to, low-quality waste streams, e.g. from municipal solid waste, reject streams of sorting or recycling plants, with low polyolefin contents (< 50 wt%) and a high level of contaminants (e.g. biomass, paper, paperboard, cardboard, stones, glass, and other polymers such as PS, ABS, PET, PA and multilayer materials, where their respective polyolefin content is also leveraged).

The process preferably allows processing of colored polyolefins, such as black polyolefins, as well as strongly metallized film materials, which both are difficult to sort with NIR sorters. Thus, waste streams comprising high amounts of colored (e.g. black) materials (e.g. plastic waste from automotive, electronics, cable and wiring), which conventionally require sorting with dedicated MIR sorters, may be processed directly.

Preferably, the polymer-containing waste material is not pre-treated, preferably not chemically pretreated, polymer-containing waste material.

In step B of the process, the polymer-containing waste material is contacted with a non-polar solvent (S) comprising, or consisting of, at least one hydrocarbon, optionally halogenated hydrocarbon, having from 4 to 10 carbon atoms. Preferably, the hydrocarbon, optionally halogenated hydrocarbon, is selected from the group consisting of linear aliphatic hydrocarbons, such as n-butane, n-pentane, n-hexane, n-heptane, n-octane, n-nonane and n-decane; aromatic hydrocarbons, such as phenol, toluene, xylene, ethylbenzene and tetralin; cyclic hydrocarbons, such as cyclohexane, decalin and tetralin; and chlorinated aromatic hydrocarbons, such as chlorobenzene, dichlorobenzene and trichlorobenzene, and mixtures thereof. The non-polar solvent may comprise further hydrocarbon components, such as other alkanes, alkenes, cycloalkane or aromatic alkanes. Preferably, the non-polar solvent does not comprise any polar components.

By definition, polar solvents comprise one or more compounds that have a net dipole. Respectively, non-polar solvent do not have a net dipole. Polarity of compounds may be determined empirically. For example, it can be given as Empirical Parameters of Solvent Polarity $E_T(30)$ or as the respective normalized values $E_T^N$, as e.g. described in Christian Reichardt, "Solvatochromic Dyes as Solvent Polarity Indicators", Chemical Reviews, 1994, Vol. 94, No.8, page 2319-2358. Preferably, in the meaning of the present invention, non-polar solvents according to the invention have an $E_T^N$ value of up to 0.2, and polar solvents an $E_T^N$ value of above 0.2, respectively.

In one embodiment, the non-polar solvent comprises, or consists of, a linear aliphatic hydrocarbon selected from the group consisting of n-butane, n-pentane and n-hexane. These compounds provide satisfying dissolution rates for polyolefin material, however, they do not dissolve polystyrene material. In this embodiment, polystyrene material remains in the undissolved material (U) and may be dissolved by the sequence of process steps comprising the steps B1 to E1, as described below.

In another embodiment, the non-polar solvent comprises, or consists of, an aromatic hydrocarbon selected from the group consisting of phenol, toluene and xylene, preferably xylene. These compounds provide even better dissolution rates of polyolefin material, however, they also dissolve polystyrene material. Thus, in this embodiment, polystyrene material may be dissolved together with polyolefin material and may be separated from polyolefin material in a separating step E comprising the steps F, G and H, as described below.

In one particular embodiment, the non-polar solvent is a refinery gasoline fraction comprising hydrocarbons having from 5 to 10 carbon atoms, preferably a refinery light gasoline fraction comprising hydrocarbons having 5 and 6 carbon atoms. The advantage of using refinery gasoline fractions is that they may be withdrawn from the refinery process, used in the present process (in step B and fed back to the refinery process afterwards, i.e. in step E of the process, for further distillation. Such a process may provide economic benefits in particular if the present process is integrated into an oil refinery.

Preferably, the ratio (wt/wt) of solvent to the polymer-containing waste material is in the range of 3:1 to 20:1, more preferably 3:1 to 10:1 and most preferably 3:1 to 5:1, such as 4:1. For economic reasons, it is preferred that the content of solvent is relatively low. However, lower solvent contents may have negative influence on the dissolution kinetics (e.g. the solution gets highly viscous). Higher pressures may compensate for this drawback. The above-described ratio similarly applies to the dissolution of undissolved material in the process of the present invention.

In one embodiment, the contacting step B is carried out at room temperature (i.e. about 20 °C) and at atmospheric pressure (i.e. about 0.1 MPa).

In another embodiment, the contacting step B is carried out at an enhanced temperature, such as at least 50 °C, and preferably at the dissolution temperature (T) and at atmospheric pressure (i.e. about 0.1 MPa).

In step B of the process, a composition (C) comprising the polymer-containing waste material and the solvent is formed. Preferably, the composition (C) is a liquid/solid phase system (LS), i.e. comprising the polymer-containing waste material and the liquid solvent.

In the sequential heating step C, preferably being directly after step B, the composition (C) is heated at a dissolution temperature (T) in the range of 135 to 200 °C and a pressure (P) in the range of 0.1 to 5 MPa for a period of from 5 min to 5 h (M), to obtain a solution comprising the solvent (S) and the polyolefin material dissolved in the solvent (S) and an undissolved material (U).

In the heating step C, polyolefin material is dissolved from the polymer-containing waste material. Preferably, at least 80 wt%, more preferably at least 90 wt% most preferably at least 95 wt% and up to 100 wt% of polyolefin material, based on the total weight of polyolefin material in the polymer-containing waste material, is dissolved from the polymer-containing waste material. Also other polymer material may be dissolved from the polymer-containing waste material such as polystyrene material, as well as some of the non-polymer material originally contained in the waste material.

The undissolved material (U) preferably comprises other polymer components, such as non-polyolefin polymers. It may also comprise undissolved polyolefin material (preferably in a low content of up to 10 wt%) and non-polymer material originally contained in the polymer-containing waste material.

The dissolution temperature used in step C generally depends on the content of the polymer-containing waste material, the solvent and the process conditions, such as pressure and dissolution time. Generally, the dissolution temperature (T) is in the range of from 135 to 200 °C, preferably from 135 to 180 °C, more preferably of from 135 to 170 °C and even more preferably of from 135 to 155 °C.

The invention is based on the knowledge that chemically similar materials can be dissolved in chemically similar solvents ("similia similibus solvuntur"), i.e. non-polar solvents interacts preferably with non-polar materials. Furthermore, it is essential to bring the dissolvable polymer to a thermally higher level (for material softening, swelling and/or solvating the outer surface). Initial experiments indicated that the softening (solvating the outer surface) gets more effective by the application of temperatures nearby the melting temperature of the polyolefin material. Furthermore, low overpressures support the penetration of the solvent into the surface and the outer (accessible) pore structure of the materials. This phenomenon is independent from the way of application the overpressure, i.e. whether it is generated on thermal or hydrodynamic way.

Generally, the pressure (P) is in the range of 0.1 to 5 MPa, preferably of 0.1 to 4 MPa, more preferably of 0.1 to 3 MPa and most preferably of 0.1 to 2 MPa.

Within the meaning of the present invention, all pressures are indicated as absolute pressures, unless otherwise indicated. A pressure above atmospheric pressure may be used, which advantageously increases the dissolution kinetic and thus facilitates dissolution of the solid polymer material mixture. However, dependent on the solvent, atmospheric pressures may be similarly effective. The used pressure is dependent from the vapor pressure of the solvent, being a function of temperature. Usually, the pressure for any dissolution reaction within the present invention is the vapor pressure of the respective solvent at the respective dissolution temperature.

The dissolution time (M) is generally from 5 min to 5 h, preferably from 10 min to 4 h, more preferably from 20 min to 3 h and most preferably from 30 min to 2 h.

In one preferred embodiment, n-hexane is used as the solvent at a dissolution temperature in the range of 135 to 200 °C for a period of 10 min to 3 h, preferably 20 min to 1 h, and preferably at a pressure in the range of 1 to 2.8 MPa.

In another preferred embodiment, toluene is used as the solvent at a dissolution temperature in the range of 135 to 180 °C for a period of 10 min to 3 h, preferably 20 min to 1 h, and preferably at a pressure in the range of 1 to 2.8 MPa.

In another preferred embodiment, xylene is used as the solvent at a dissolution temperature in the range of 135 to 137 °C for a period of 30 min to 3 h, preferably 1 to 1.5 h, and preferably at a pressure in the range of 0.1 to 1.5 MPa, more preferably of 0.1 to 1 MPa.

In a further preferred embodiment, n-decane is used as the solvent at a dissolution temperature in the range of 150 to 170 °C for a period of 1 to 5 h and preferably at pressure in the range of 0.1 to 1 MPa.

In all embodiments, increasing the dissolution temperatures and/or pressures leads to improved dissolution kinetics, and thus the dissolution period may be shortened.

Subsequently, and preferably directly after step C, separating step D is performed, wherein the undissolved material (U) is separated from the solution. Generally, separation of undissolved material may be carried out by any convention liquid/solid separation technique. Preferably, the liquid/solid separation is performed by gravity settling and/or filtration, preferably hot filtration at a temperature of not less than 30 °C below the dissolution temperature. Preferably, a sieve or a filter, preferably of metal or ceramic material, are used for the (hot) filtration. In a preferred embodiment an adsorption filter (i.e. a filter comprising or consisting of an adsorption material) is used for filtration. In this embodiment, pigments and other coloring agents dissolved in the solution are also separated from the solution.

In one embodiment, preferably of the continuous process, the solvent is removed from a (first) container (such as a first stirred tank) through a sieve, while the undissolved material (U) remains in the sieve. Optionally, the undissolved material (U) is transferred to a second container (such as a second stirred tank), e.g. by means of a screw conveyer/dewatering screw as the transferring aid. The undissolved material (U) may then be contacted with a solvent according to step B1 in the first container or in the second container, respectively.

In further embodiments, the separation of step D may be carried out as centrifugal or cyclone separation.

Separating step E of the process is subsequently performed to separate the polyolefin material from the solution (S), and optionally separating the solvent (S) from the solution. Preferably, a high content of polyolefin material, ideally all polyolefin material is separated as described for the dissolved material of step C. The polyolefin material may further contain additional material as also described for the solution of step C. Preferably, purity of the polyolefin material is at least 80 wt%, more preferably at least 90 wt% and most preferably at least 95 wt% and up to 100 wt%, based on the total weight of the polyolefin material obtained after step E. In other words, preferably, other non-polyolefin polymer material and non-polymer material are contained in the polyolefin material in a content of up to 20 wt%, more preferably up to 10 wt% and most preferably up to 5 wt% or even 0 wt%, based on the total weight of the polyolefin material obtained after step E. Separation of the polyolefin material from the solution may be carried out by any convention separation technique known in the art.

In one embodiment, the separation is carried out by evaporation or flash devolatilization of the solvent (S). Preferably flash devolatilization is carried out by applying a pressure booster, i.e. by rapidly changing the pressure from the dissolution pressure to below 0.1 MPa, e.g. vacuum, in order to lower the required temperature for volatilization of the solvent. Preferably, flash devolatilization is carried out by a temperature of below 200 °C, but above the boiling point of the solvent in atmospheric pressure of 0.1013 MPa, such as in the range of in the range of from 0 to 180 °C and a pressure change from dissolution pressure to below atmospheric pressure (e.g. vacuum). Preferably, the polyolefin material is obtained as a solid, preferably crystallized, product after the separating step E. In this embodiment, the solvent (S) is simultaneously separated from the solution. This embodiment is particularly preferred if polystyrene material is not present in the solution of step C, for example if polystyrene material is not present in the polymer-containing waste material or a solvent is used in steps B/C that does not dissolve polystyrene material (e.g. n-butane, n-pentane or n-hexane).

In another embodiment, the separation is carried out by precipitation of the polyolefin material by cooling the solution and filtration. In this embodiment, the solvent (S) is afterwards optionally separated from the solution. This embodiment usually provides polyolefin material with higher purity than the above embodiment.

In a further embodiment, the separation is carried out by precipitation of the polyolefin material by adding a polar solvent and filtration. In this embodiment, the solvent (S) is afterwards optionally separated from the solution. This embodiment is particularly preferred if higher contents of polystyrene material are present in the solution of step C, for example if polystyrene material is present in a content of 30 wt% or more, preferably 40 wt% or more, in the polymer-containing waste material and/or if a solvent is used in steps B/C that also dissolves polystyrene material (e.g. xylene).

In a particular embodiment, the separating step E comprises the steps of:

F) adding at least one polar compound, preferably a compound selected from the group consisting of alcohols, such as ethanol, propanol and butanol; and ketones, such as acetone and methyl ethyl ketone, to the solution obtained after step D, to precipitate the polyolefin material contained in the solution;

G) filtrating the solution to separate the precipitated polyolefin material from the solution;

H) optionally, separating at least one further polymer material, preferably polystyrene material, from the solution, preferably by evaporating the solvent.

The polyolefin material obtained after steps E or G and/or the polystyrene material obtained after step H may be washed from the solution and/or dried in further steps.

The solvent (S) recovered after any of the separating steps E or H may be reused in step B.

In one embodiment, the process according to the present invention comprises a sub-process of reducing the size of the polymer-containing waste material e.g. by grinding and optionally size-separating the polymer-containing waste material before step A, to provide polymer-containing waste material particles, preferably having a particle size of from 10 $\mu$m to 20 mm, as determined by the sieve analysis described herein below. This improves processability of the polymer containing waste material and maximizes its surface area for the following dissolution step. All these sub-processes reducing the size of the polymer-containing waste material are common processes well-known in the art.

The steps of the process according to the invention have been proven particularly advantageous in combination with additional steps, as depicted in the following embodiments.

In one embodiment, the process according to the invention comprises the sequence of steps:

- reducing the size of the polymer-containing waste material to a particle size of up to 20 mm, as determined by the sieve analysis described herein below, preferably by grinding and/or size separation;
- steps A, B and C as described above;
- step D, wherein the undissolved material (U) is separated from the solution by gravity settling and filtration; and
- step E, wherein the polyolefin material is separated from the solution by evaporation of the solvent.

The extracted polyolefin material may still contain other material such as non-polyolefin polymer material and non-polymer material, as described above. This embodiment is preferably applied for polymer-containing waste material comprising low contents (e.g. less than 5 wt%, based on the total weight of the polymer material in the polymer-containing waste material) of polystyrene material, and/or when a solvent not dissolving polystyrene material is used (e.g. a C4 to C6 aliphatic hydrocarbon such as n-hexane). The obtained polyolefin material is particularly applicable in a further recycling process such as chemical recycling, solvent recycling, mechanical recycling and particularly pyrolysis. Accordingly, in the present embodiment, one of the steps of chemical recycling and/or mechanical recycling and/or particularly pyrolysis may be comprised. The recovered solvent (S) may be reused in step B.

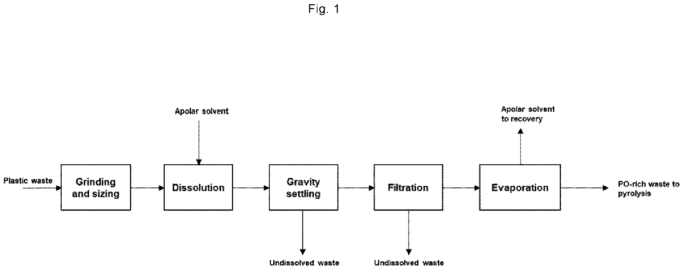

The flow diagram of Figure 1 exemplifies a process according to the above embodiment. Accordingly, plastic waste feedstock is first treated mechanically to reduce the size of the plastic waste particles, with the purpose of increasing mass transfer surface during the subsequent dissolution step. For the dissolution step, the treated plastic waste and an apolar (non-polar) solvent are continuously introduced into a vessel. The mixture of plastic waste and solvent is allowed to mix and reside in the vessel for a time determined by the active volume of the vessel, under the conditions as defined above. After sufficient time, the polyolefinic part of the plastic waste is dissolved in the apolar solvent and the mixture is transferred to a next vessel. In the next vessel gravity settling takes place and allows undissolved part of the waste to settle at the bottom of the vessel. Solvent/polyolefin solutions, now partly free of solids, are filtered in a filtration step to remove any remaining solids. In a subsequent step, the solvent/polyolefin solution is subjected to heat and reduces pressure, allowing the apolar solvent to vaporize for further use, resulting in a dry polymer fraction with highly increased polyolefin content compared to the plastic waste feedstock.

In another embodiment, the process according to the invention comprises the sequence of steps:

- reducing the size of the polymer-containing waste material to a particle size of up to 20 mm, as determined by the sieve analysis described herein below, preferably by grinding and/or size separation;
- steps A, B and C as described above;
- step D, wherein the undissolved material (U) is separated from the solution by gravity settling and filtration; and
- step E, wherein the polyolefin material is separated from the solution by cooling the solution, which leads to precipitation (preferably crystallization) of the polyolefin material, and filtration of the precipitated/crystallized polyolefin material to separate the polyolefin material from the solution.

The extracted polyolefin material may still contain other material such as non-polyolefin polymer material and non-polymer material, as described above. The obtained polyolefin material is particularly applicable in a further recycling process such as chemical recycling, solvent recycling, mechanical recycling and particularly pyrolysis. Accordingly, in the present embodiment, one of the steps of chemical recycling and/or mechanical recycling and/or particularly pyrolysis may be comprised. In this embodiment, the solvent (S) may be evaporated from the solution and be reused in step B. As the solution may contain polymer material, which did not crystallize, this polymer material may be obtained as solid material after an evaporation step for the solvent.

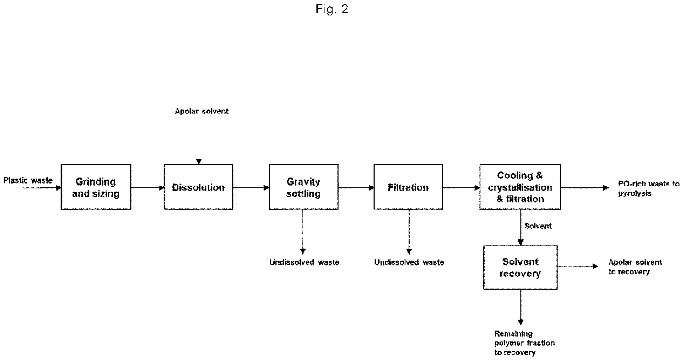

The flow diagram of Figure 2 exemplifies a process according to the above embodiment. The steps up to and including the separation of undissolved waste (step E) are as described above with respect to Figure 1. Subsequently, the solution is subjected to decreased temperature to reduce the solubility of the polyolefins in the solvent, allowing polyolefins to crystallize and to form a solid fraction. The crystallized solid fraction with increased polyolefin content compared to the plastic waste feedstock is then removed for further use, and the liquid solvent is evaporated for recovery. Any polymers not crystallized in the crystallization step will form another solid fraction in this step and can be blended with the crystallized polyolefin fraction or discarded as waste.

In a further embodiment, the process according to the invention comprises the sequence of steps:

- reducing the size of the polymer-containing waste material to a particle size of up to 20 mm, as determined by the sieve analysis described herein below, preferably by grinding and/or size separation;
- steps A, B and C as described above;
- step D, wherein the undissolved material (U) is separated from the solution by gravity settling and filtration; and
- step E, wherein the polyolefin material is separated from the solution by addition of a polar solvent, such as those described for step F above, which leads to precipitation (preferably crystallization, although both wordings are used as synonyms in the present invention) of the polyolefin material, and filtration of the precipitated/crystallized polyolefin material to separate the polyolefin material from the solution.

The extracted polyolefin material may still contain other material such as traces of solvent, non-polyolefin polymer material and non-polymer material, as described above. The obtained polyolefin material is particularly applicable in a further recycling process such as chemical separation, mechanical separation and particularly pyrolysis. Accordingly, in the present embodiment, one of the steps of chemical separation and/or mechanical separation and/or particularly pyrolysis may be comprised. In this embodiment, the solvent (S) may be evaporated from the solution and be reused in step B. As the solution may contain polymer material, which did not crystallize, this polymer material may be obtained as solid material after an evaporation step for the solvent.

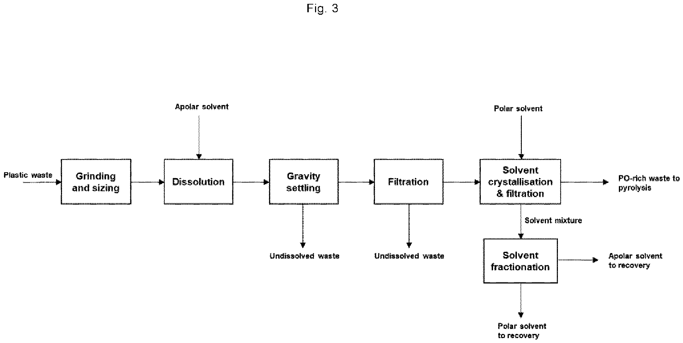

The flow diagram of Figure 3 exemplifies a process according to the above embodiment. The steps up to and including the separation of undissolved waste (step E) are as described above with respect to Figure 1. Subsequently, the solution is mixed with a polar solvent in a vessel. The presence of a polar solvent reduces the solubility of polyolefins in the mixture, allowing polyolefins to crystallize and to form a solid fraction. The crystallized solid fraction with increased polyolefin content compared to the plastic waste feedstock is then removed for further use, and the liquid solvent is taken to further fractionation. In the fractionation step, the polar and apolar solvent are separated based on differences in their boiling points with conventional distillation column. Any polymers not crystallized in the crystallization step will form another solid fraction in this step and need to be separately removed from the bottom of the distillation column.

In particular embodiments, the process of the present invention may further be used for the separation and extraction of non-polyolefin polymers from the polymer-containing waste material. By this process polymers with high purity grades are obtained.

Polystyrene material may be extracted by the above-described embodiment of the process containing steps F, G and H. If the purity grade is not satisfying after step H, further purification steps may be added.

In another embodiment of the process according to the present invention for the extraction of polystyrene material, the process further comprises the following steps, which are preferably subsequent or simultaneous to step E:

B1) contacting the undissolved material (U) separated in step D with a solvent (S1), preferably comprising at least one compound selected from the group consisting of aromatic hydrocarbons, such as phenol, toluene, xylene, ethylbenzene and tetralin; cyclic hydrocarbons, such as decalin and tetralin; chlorinated aromatic hydrocarbons, such as chlorobenzene, dichlorobenzene and trichlorobenzene; ketones, such as acetone and methyl ethyl ketone; and aliphatic alcohols, such as ethanol, propanol, butanol, pentanol, hexanol and heptanol; wherein the undissolved material comprises polystyrene material, to form a composition (C1);

C1) heating the composition (C1) at a dissolution temperature (T1) in the range of 50 to 200 °C, preferably of 50 to 170 °C, and a pressure (P1) in the range of 0.1 to 5 MPa for a period (M1) of from 10 min to 30 min if the dissolution temperature (T1) is above 130 °C; or from 30 min to 5 h if the dissolution temperature (T1) is below 130 °C, to obtain a solution comprising the solvent (S1) and the polystyrene material dissolved in the solvent and, optionally, an undissolved material (U1);

D1) optionally, separating the undissolved material (U1) from the solution;

E1) separating the polystyrene material from the solution and, optionally, separating the solvent (S1) from the solution.

The embodiments and preferred features described with respect to the steps A to E above are also embodiments of the process comprising the steps A1 to E1, if not stated to the contrary.

In the embodiment of the process comprising steps B1 to E1, preferably a solvent (S) is used in step B, which does not dissolve polystyrene material, such as e.g. n-butane, n-pentane or n-hexane. The solvent (S1) used in step B1 is preferably different from the solvent (S) of step B.

Further, polyethylene terephthalate material and/or polyamide material may be extracted by one particular embodiment of the process according to the invention.

Thus, in one embodiment of the process according to the invention for the extraction of polyethylene terephthalate material and/or polyamide material, the process further comprises the following steps, which are preferably subsequent or simultaneous to step E or E1:

B2) contacting the undissolved material (U) separated in step D or the undissolved material (U1) separated in step D1 with a polar solvent (S2), preferably comprising at least one compound selected from the group consisting of m-cresole, chlorophenole, trifluoroacetic acid, formic acid, and hexafluoroisopropanol, wherein the undissolved material (U) or (U1) comprises polyethylene terephthalate material and/or polyamide material, to form a composition (C2);

C2) heating the composition (C2) at a dissolution temperature (T2) in the range of 50 to 200 °C, preferably of 50 to 180 °C, and a pressure (P2) in the range of 0.1 MPa to 5 MPa for a period (M2) of from 5 min to 5 h, to obtain a solution comprising the solvent (S2) and the polyethylene terephthalate material and/or the polyamide material dissolved in the solvent (S2) and, optionally, an undissolved material (U2);

D2) optionally, separating the undissolved material (U2) from the solution, wherein the undissolved material (U2) preferably comprises polyvinylchloride material;

E2) separating the polyethylene terephthalate material and/or the polyamide material from the solution, and optionally separating the solvent (S2) from the solution.

The embodiments and preferred features described with respect to the steps A to E above are also embodiments of the process comprising the steps A2 to E2, if not stated to the contrary.

In one preferred embodiment, m-cresol is used as the solvent at a dissolution temperature of 150 to 200 °C for a period of 30 min to 3 h, in step C2.

By step D2 of the above process, undissolved material (U2) may be separated, wherein the undissolved material (U2) comprises polyvinylchloride material. Often, the undissolved material (U2) further comprises non-polymer material such as e.g. chalk, or cellulose. The undissolved material (U2) may be further processed to extract the polyvinylchloride material from the undissolved material (U2).

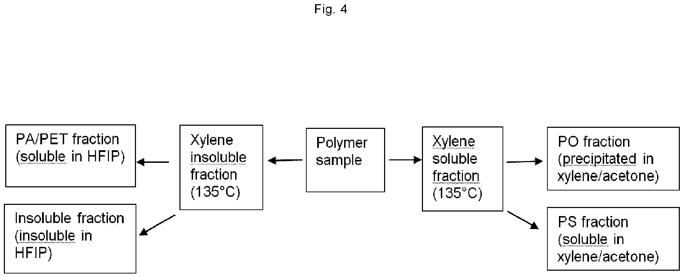

Figure 4 illustrates one embodiment of the process according to the invention by a scheme.

The process according to the invention of any of the above described embodiments may further comprise a sub-process of analyzing any one of the polymer materials separated in steps E, G, H, E1, E2 and/or D2, preferably via FTIR and/or NMR.

In a further particular embodiment of the process according to the present invention, the polymer material separated in any one of steps E, E1 or E2, preferably the polyolefin material separated in step E, is further treated in a recycling process selected from any one of chemical recycling, mechanical recycling and solution recycling, preferably pyrolysis.

The present invention also relates to a waste recycling process comprising the process for extracting polymers, preferably polyolefins, from polymer-containing waste material according to any one of the above-described embodiments, and further treating the polymer material separated in any one of steps E, E1 or E2, preferably the polyolefin material separated in step E, in a recycling process selected from any one of chemical recycling, mechanical recycling and solution recycling, preferably pyrolysis.

The present invention also relates to a polymer material obtainable or obtained by a process according to any one of the above-described embodiments.

The present invention further relates to the use of the polymer material, preferably the polyolefin material, obtainable or obtained by a process according to any one of the above-described embodiments in the manufacture of an article.

The present invention still further relates to a method for analyzing the content of polymer material in polymer-containing waste material, wherein the method comprises the steps of any one of the embodiments of the above-described process. In general, the method may be performed at similar conditions as the process, however, with a smaller amount of polymer-containing waste material. The conditions (i.e. dissolution temperature, pressure and time) may be identical to those of the process steps C, C1 and/or C2, however, they may be adjusted to shorter dissolution times, by e.g. enhancing the dissolution temperature by 5 to 20 °C. By the method of the present invention, the content of the different materials in the polymer material of the polymer-containing waste material may be determined in quality and quantity. This method may be used to evaluate the steps and conditions for recycling of waste material based on the obtained results.

In one embodiment, the present invention provides a method for analyzing the content of polymer material in polymer-containing waste material, wherein the method comprises the steps A, B, C, D, E, B1, C1, D1, E1, B2, C2, D2 and E2, as described above, and wherein the polymer materials separated in steps E, E1 and/or E2, and/or the undissolved material (U2) obtained after step D2 are analyzed for their contents.

In another embodiment, the present invention provides a method for analyzing the content of polymer material in polymer-containing waste material, wherein the method comprises the steps A, B, C, D, E, wherein step E comprises the steps F, G and H, and the steps B2, C2, D2 and E2, as described above, and wherein the polymer materials separated in steps E, comprising the steps G and H, and/or E2, and/or the undissolved material (U2) obtained after step D2 are analyzed for their contents.

In one embodiment of any of the above methods, the solutions separated in steps E, E2 and E3 are additionally analyzed for their contents.

Preferably, the analysis is performed by gravimetrically and by via FTIR and/or NMR.

In the following, the invention will further be illustrated by way of examples which refer to the following figures:

Figure 1 shows a flow chart of a process according to the present invention, wherein evaporation is used for solvent recovery.

Figure 2 shows a flow chart of a process according to the present invention, wherein cooling and crystallization is used for solvent recovery.

Figure 3 shows a flow chart of a process according to the present invention, wherein addition of a polar solvent and crystallization are used for solvent recovery.

Figure 4 shows a polymer extraction scheme.

**Methods**

The following definitions of terms and measurement and determination methods apply to the above general description of the invention as well as to the below examples.

a) FTIR

The amount of "iPP", "PVC", "PA", "PET", "PS" and "PE" was determined by Transmission InfraRed spectroscopy.

Sample preparation:

All calibration samples and samples to be analyzed are prepared in similar way, on molten pressed plates. 2 to 3 g of compounds to be analyzed are molten at 190°C curve, 20 seconds under 60 to 80 bar pressure, in an hydraulic heating press and cooled down to room temperature during 40 second in a cold press under the same pressure, in order to control the morphology of the compound. The thickness of the plates are controlled by metallic calibrated frame plates 2,5 cm by 2,5 cm, 100 to 200 $\mu$m thick (depending MFR from the sample); two plates are produced in parallel at the same moment and in the same conditions. The thickness of each plate is measured before any FTIR measurements; all plates are between 100 to 200 $\mu$m thick.

To control the plate surface and to avoid any interference during the measurement, all plates are pressed between two double-sided silicone release papers.

In case of powder samples or heterogeneous compounds, the pressing process would be repeated three times to increase homogeneity by pressed and cutting the sample in the same conditions as described before.

Spectrometer:

Standard transmission FTIR spectroscope such as Bruker Vertex 70 FTIR spectrometer is used with the following set-up:

- a spectral range of 4000-400 cm$^{-1}$,
- an aperture of 6 mm,
- a spectral resolution of 2 cm$^{-1}$,
- with 16 background scans, 16 spectrum scans,
- an interferogram zero filling factor of 32
- Norton Beer strong apodisation.

Spectrum are recorded and analysed in Bruker Opus software.

Calibration samples:

As FTIR is a secondary method, several calibration standards were compounded to cover the targeted analysis range, typically from:

- 0.2 wt% to 2.5 wt% for PA

- 0.1 wt% to 5 wt% for PS

- 0.1 wt% to 5 wt% for PET

- 0.1 wt% to 4 wt% for PVC

The following commercial materials were used for the compounds: Borealis HC600TF as iPP, Borealis FB3450 as HDPE and for the targeted polymers such RAMAPET N1S (Indorama Polymer) for PET, Ultramid® B36LN (BASF) for Polyamide 6, Styrolution PS 486N (Ineos) for High Impact Polystyrene (HIPS), and any commercial PVC.

All compounds are made at small scale in a Haake kneader at a temperature below 265°C and less than 10 minutes to avoid degradation.

Additional antioxidant such as Irgafos 168 (3000 ppm) is added to minimize the degradation.

Calibration:

The FTIR calibration principal is the same for all the components: the intensity of a specific FTIR band divided by the plate thickness is correlated to the amount of component determined by 1H or 13C solution state NMR on the same plate.

Each specific FTIR absorption band is chosen due to its intensity increase with the amount of the component concentration and due to its isolation from the rest of the peaks, whatever the composition of the calibration standard and real samples.

This methodology is described in the publication from Signoret and al. "Alterations of plastic spectra in MIR and the potential impacts on identification towards recycling", Resources, conservation and Recycling journal, 2020, volume 161, article 104980.

The wavelength for each calibration band is:

- 3300 cm$^{-1}$ for PA,
- 1601 cm$^{-1}$ for PS,
- 1409 cm$^{-1}$ for PET,
- 615 cm$^{-1}$ for PVC,
- 1167 cm$^{-1}$ for iPP.

For each polymer component i, each calibration correlation is the following:

$$xi = Ai.\frac{Ei}{d} + Bi$$

where

$X_i$ is the fraction amount of the polymer component i (in wt%);

$E_i$ is the absorbance intensity at the polymer component i specific band (in a.u. absorbance unit), respectively at 3300 cm$^{-1}$ for PA, 1601 cm$^{-1}$ for PS, 1409 cm$^{-1}$ for PET, 615 cm$^{-1}$ for PVC, 1167 cm$^{-1}$ for iPP;

$d$ is the thickness of the sample plate;

$A_i$ and $B_i$ are two coefficients of correlation determined for each calibration curve.

No specific isolated band can be found for PE and as consequence,

$$x_{PE} = 100 - (x_{iPP} + x_{PA} + x_{PS} + x_{PET} + x_{PVC})$$

where 100 stands for the amount of polymer in the sample, and the amount of polymer is generally determined by the ash content.

For each calibration standard, the amount of each component is determined by the initial sample amount added into the compound.

b) Ash content (amount of inorganic fillers)

Thermogravimetric Analysis (TGA) experiments were performed with a Perkin Elmer TGA 8000. Approximately 10-20 mg of materials were placed in a platinum pan. The temperature was equilibrated at 50°C for 10 minutes, and afterwards raised to 950°C under nitrogen at 20°C/min. The ash content was evaluated as the wt% at 850 °C, based on the total weight of the used starting material.

c) Particle size determination

Particle sizes, in particular particle sizes of waste material, are determined by classifying (dry) sieve analysis, sieving performed as described in DIN 66165 (in particular, DIN 66165-2 describing the analysis method), e.g. using sieves according to ISO 565 with nominal aperture size of 22.4 mm etc. The particle sizes are preferably D90 particle sizes.

**Examples**

Polymer extraction process

One embodiment of the process according to the invention for polymer extraction is described below and as illustrated in the scheme of Figure 4.

For the examples, five samples of different polymer mixtures (one polymer mixture of a known content and four waste samples of unknown contents, as indicated in Table 1) were used:

3 g of each of the samples was weighed out exactly to 0.1 mg. Each sample was placed in a pouch made of stainless steel mesh of the following material ("DRAHTGEWEBE Materialqualität: Edelstahl 1.4401"), which was placed in a round flask filled with 700 mL of xylene (ortho- or para-xylene, with a purity chromatography >98 %). Xylene was kept under reflux conditions for 5 h. The pouch containing the insoluble matter was taken out of the flask, washed from the polymer solution residues with a fresh portion of xylene for another 30 minutes. Afterwards the pouch was dried under vacuum at 90 °C.

The polymer dissolved in xylene was precipitated with 1 L of cold acetone (< 8 °C). The filtration step was performed using filter paper e.g. Whatman No. 4, No 541 or corresponding, with diameter of at least 125 mm. The filtered solid fraction was dried overnight at 60 °C in a vacuum oven and weighted out before further testing. This polymer fraction containing polyolefin is called PO fraction.

By evaporating the acetone/xylene mixture from the filtrate, the polystyrene (PS) fraction was obtained as residue. The PS residue was dried at 60 °C under vacuum overnight. This polymer fraction containing polystyrene is called PS fraction.

The pouch containing the insoluble matter in xylene was placed in a round flask filled with 150 mL hexaisofluoropropanol (HFIP). The HFIP was kept under reflux conditions for 1 h. The pouch containing the insoluble matter was taken out of the flask and washed from the polymer solution residues with a fresh portion of HFIP and afterwards dried in a vacuum oven at 90 °C.

By evaporating the HFIP from the HFIP filtrate a polyamide and/or polyethylene terephthalate fraction was obtained as residue. The PA/PET residue was dried at 90 °C under vacuum. This polymer fraction containing polyamide and/or polyethylene terephthalate is called PA/PET fraction.

The insoluble matter in HFIP in the metal pouch contained polyvinylchloride (PVC), cellulose and other inorganic fillers.

The percentage of the different polymer fraction (PO, PS, PA/PET fractions and insoluble fraction) in the polymeric material used was obtained gravimetrically:

$$wt.\% \; polymer \; fraction = \frac{m_1}{m_0}$$

where:

$m_0$ is the mass of the sample test portion weighed, in grams;
$m_1$ is the mass of the separated solid after drying, in grams; (for the insoluble fraction, $m_1$ is the mass of the residue - the mass of the metal pouch)

The polymer fractions were further analyzed for their content by the FTIR spectroscopy, as described in the Method section.

The obtained results are summarized in Table 1 below. All percentages are given in wt%: for the components of the fractions, the wt% is based on the total weight of the respective fraction (both provided in the solid state); the percentage for the respective fractions (in the solid state) is based on the total weight of the polymer sample used.

Table 1:

| Sample | Composition | PO fraction (xylene soluble) | PS fraction (xylene + acetone soluble) | PA/PET fraction (HFIP soluble) | Insoluble fraction | Ash |
|---|---|---|---|---|---|---|
| **Polymer mixture** | 80 % PO 5 % PET 5 % PA 5 % PS 5 % PVC-filled | 99 % PO 1 % PS (~ 75% of sample) | ~ 65 % PS + non-polymer material | 50 % PA 50 % PET | PVC + chalk + small amounts of PA + PET | - |
| **Waste sample 1** | unknown | 99.4 % PO 0,3 % PS 0,3 % inorganic (42,1 % of sample) | ~ 51 % PS + non-polymer material (11.1 % of sample) | 97 % PET 3 % PA | Cellulose + chalk | 15% |

(continued)

| Sample | Composition | PO fraction (xylene soluble) | PS fraction (xylene + acetone soluble) | PA/PET fraction (HFIP soluble) | Insoluble fraction | Ash |
|---|---|---|---|---|---|---|
| **Waste sample 2** | Reject from a waste sorting plant | 99.1 % PO 0,3 % PS 0,5 % inorganic material 0,1 % PA (42,3 % of sample) | ~ 64 % PS (12.8 % of sample) | 95 % PET 5 % PA (10.3 % of sample) | Cellulose + chalk | 15% |
| **Waste sample 3** | Waste stream from cable and wire sorting plant | 90.9 % PO 4.3 %PS 4 % inorganic material (26,3 % of sample) | ~ 64 % PS (11.4 % of sample) | 95 % PET 5 % PA (14,2 % of sample) | Cellulose + chalk + talk + silicone | 13.1 % |
| **Waste sample 4** | Reject from a recycling plant | 99 % PO 0.8 % PS 0.2 % inorganic material (50.1 % of sample) | ~ 81 % PS (10.7 % of sample) | 83.2 % PET 16.8 % PA (12.4 % of sample) | Cellulose | N/A |

Table 1 illustrates that the process mostly provided highly enriched polyolefin fractions with percentages of at least 99 wt%. Also for the waste samples of unknown composition, amounts of more than 99 wt% of polyolefin in the separated fractions were obtained (except for the waste sample 3). Only small amounts of PS were present in the PO fractions.

As can also be seen from the polymer mixture with the known composition, the dissolution rate of PO from the mixture was very high.

Also very pure PA/PET fractions were obtained.

The PS fractions always contained more than 50 wt% of PS. Such enriched fractions may be used in further PS recycling processes.

The ash content indicates the amount of inorganic fillers.

From the obtained results, the composition of the unknown samples could be determined. Thus, the described process may be used as a method for analyzing the content of unknown samples, such as waste samples.

**Claims**

1. A process for extracting polymers, preferably polyolefins, from polymer-containing waste material comprising the steps of:

   A) providing polymer-containing waste material comprising polyolefin material;
   B) contacting the polymer-containing waste material with a non-polar solvent (S) comprising at least one hydrocarbon, optionally halogenated hydrocarbon, having from 4 to 10 carbon atoms, to form a composition (C);
   C) heating the composition (C) at a dissolution temperature (T) in the range of 135 to 200 °C and a pressure (P) in the range of 0.1 to 5 MPa for a period of from 5 min to 5 h (M), to obtain a solution comprising the solvent (S) and the polyolefin material dissolved in the solvent (S), and an undissolved material (U);
   D) separating the undissolved material (U) from the solution;
   E) separating the polyolefin material from the solution, and optionally separating the solvent (S) from the solution.

2. The process according to claim 1, wherein the polymer-containing waste material comprises from 5 to 90 wt% of polymer material, preferably from 10 to 60 wt% of polymer material, more preferably from 10 to 90 wt% of polyolefin material, based on the total weight of the polymer-containing waste material.

3. The process according to any one of the preceding claims, wherein the polymer material of the polymer-containing waste material further comprises at least one polymer material selected from the group consisting of polystyrene (PS) material, polyethylene terephthalate (PET) material, polyamide (PA) material and polyvinyl chloride (PVC) material.

4. The process according to any one of the preceding claims, wherein the hydrocarbon, optionally halogenated hydrocarbon, is selected from the group consisting of linear aliphatic hydrocarbons, such as n-butane, n-pentane, n-hexane, n-heptane, n-octane, n-nonane and n-decane; aromatic hydrocarbons, such as phenol, toluene, xylene, ethylbenzene and tetralin; cyclic hydrocarbons, such as cyclohexane, decalin and tetralin; and chlorinated aromatic hydrocarbons, such as chlorobenzene, dichlorobenzene and trichlorobenzene.

5. The process according to any one of the preceding claims, wherein the solvent (S) is recovered after the separating step E, and optionally reused in step B.

6. The process according to any one of the preceding claims, wherein the process comprises a sub-process of reducing the size, preferably by grinding and optionally size-separating, of the polymer-containing waste material before step A, to provide polymer-containing waste material particles, preferably having a particle size of from 10 $\mu$m to 20 mm.

7. The process according to any one of the preceding claims, wherein the separating step E is performed by evaporating the solvent (S); or precipitating the polyolefin material, preferably by cooling the solution or by adding a polar solvent, followed by filtration.

8. The process according to any one of the preceding claims, wherein the separating step E comprises the steps of:

   F) adding at least one polar compound, preferably a compound selected from the group consisting of alcohols, such as ethanol, propanol and butanol; and ketones, such as acetone and methyl ethyl ketone; to the solution obtained after step D, to precipitate the polyolefin material contained in the solution;
   G) filtrating the solution to separate the precipitated polyolefin material from the solution;
   H) optionally, separating at least one further polymer material, preferably polystyrene material, from the solution, preferably by evaporating the solvent.

9. The process according to any one of the preceding claims, the process further comprising the steps of:

   B1) contacting the undissolved material (U) separated in step D with a solvent (S1), preferably comprising at least one compound selected from the group consisting of aromatic hydrocarbons, such as phenol, toluene, xylene, ethylbenzene and tetralin; cyclic hydrocarbons, such as decalin and tetralin; chlorinated aromatic hydrocarbons, such as chlorobenzene, dichlorobenzene and trichlorobenzene; ketones, such as acetone and methyl ethyl ketone; and aliphatic alcohols, such as ethanol, propanol, butanol, pentanol, hexanol and heptanol; wherein the undissolved material comprises polystyrene material, to form a composition (C1);
   C1) heating the composition (C1) at a dissolution temperature (T1) in the range of 50 to 200 °C and a pressure (P1) in the range of 0.1 to 5 MPa for a period (M1) of from 10 min to 30 min if the dissolution temperature (T1) is above 130 °C; or from 30 min to 5 h if the dissolution temperature (T1) is below 130 °C, to obtain a solution comprising the solvent (S1) and the polystyrene material dissolved in the solvent and, optionally, an undissolved material (U1);
   D1) optionally, separating the undissolved material (U1) from the solution;
   E1) separating the polystyrene material from the solution and, optionally, separating the solvent (S1) from the solution.

10. The process according to any one of the preceding claims, the process further comprising the steps of:

   B2) contacting the undissolved material (U) separated in step D or the undissolved material (U1) separated in step D1 with a polar solvent (S2), preferably comprising at least one compound selected from the group consisting of m-cresole, chlorophenole, trifluoroacetic acid, formic acid, and hexafluoroisopropanol, wherein the undissolved material (U) or (U1) comprises polyethylene terephthalate material and/or polyamide material, to form a composition (C2);
   C2) heating the composition (C2) at a dissolution temperature (T2) in the range of 50 to 200 °C and a pressure (P2) in the range of 0.1 MPa to 5 MPa for a period (M2) of from 5 min to 5 h, to obtain a solution comprising the solvent (S2) and the polyethylene terephthalate material and/or the polyamide material dissolved in the solvent (S2) and, optionally, an undissolved material (U2);

D2) optionally, separating the undissolved material (U2) from the solution, wherein the undissolved material (U2) preferably comprises polyvinylchloride material;

E2) separating the polyethylene terephthalate material and/or the polyamide material from the solution, and optionally separating the solvent (S2) from the solution.

11. The process according to any one of the preceding claims, wherein the process comprises a sub-process of analyzing any one of the polymer material separated in steps E, G, H, E1, E2 and/or D2, preferably via FTIR and/or NMR.

12. A waste recycling process comprising the process for extracting polymers, preferably polyolefins, from polymer-containing waste material according to any one of claims 1 to 11, and further treating the polymer material separated in any one of steps E, E1 or E2, preferably the polyolefin material separated in step E, in a recycling process selected from any one of chemical recycling, mechanical recycling and solution recycling, preferably pyrolysis.

13. A polymer material obtainable by a process according to any one of claims 1 to 12.

14. Use of the polymer material according to claim 13 in the manufacture of an article.

15. A method for analyzing the content of polymer material in polymer-containing waste material, wherein the method comprises the steps A, B, C, D, E, B1, C1, D1, E1, B2, C2, D2 and E2, of the process according to claims 1, 9 and 10 and wherein the polymer material separated in steps E, E1 and E2, and the undissolved material (U2) obtained after step D2 are analyzed for their contents; or wherein the method comprises the steps A, B, C, D, E, wherein step E comprises the steps F, G and H, and the steps B2, C2, D2 and E2, of the process according to claims 1, 8 and 10 and wherein the polymer material separated in steps E, comprising the steps G and H, and E2, and the undissolved material (U2) obtained after step D2 are analyzed for their contents.

Fig. 1

Fig. 2

Apolar solvent

Plastic waste → Grinding and sizing → Dissolution → Gravity settling → Filtration → Cooling & crystallisation & filtration → PO-rich waste to pyrolysis

Undissolved waste

Undissolved waste

Solvent → Solvent recovery → Apolar solvent to recovery

Remaining polymer fraction to recovery

Fig. 3

Apolar solvent

Polar solvent

Plastic waste → Grinding and sizing → Dissolution → Gravity settling → Filtration → Solvent crystallisation & filtration → PO-rich waste to pyrolysis

Undissolved waste

Undissolved waste

Solvent mixture

Solvent fractionation → Apolar solvent to recovery

Polar solvent to recovery

Fig. 4

| PA/PET fraction (soluble in HFIP) | ← | Xylene insoluble fraction (135°C) | ← | Polymer sample | → | Xylene soluble fraction (135°C) | → | PO fraction (precipitated in xylene/acetone) |

Insoluble fraction (insoluble in HFIP)

PS fraction (soluble in xylene/acetone)

Europäisches
Patentamt

European
Patent Office

Office européen
des brevets

# EUROPEAN SEARCH REPORT

Application Number

EP 21 16 8649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 575 421 A (UNIV HEFEI TECHNOLOGY [CN]) 11 November 2009 (2009-11-11) * abstract * * claims 1, 2 * | 1-11, 13-15 | INV. C08J11/08 ADD. C08L23/02 |
| X | US 2019/390034 A1 (LAYMAN JOHN MONCRIEF [US] ET AL) 26 December 2019 (2019-12-26) * claims 1,11,12 * * paragraph [0038] * * paragraph [0110] * * paragraph [0122] * | 1,13,14 | |
| X | US 2019/390033 A1 (LAYMAN JOHN MONCRIEF [US] ET AL) 26 December 2019 (2019-12-26) * claims 1,8,11-16 * | 1,13,14 | |
| X | US 2019/390032 A1 (LAYMAN JOHN MONCRIEF [US] ET AL) 26 December 2019 (2019-12-26) * claims 1,4,7,8,13,14 * | 1,13,14 | |
| X | US 2019/390031 A1 (LAYMAN JOHN MONCRIEF [US] ET AL) 26 December 2019 (2019-12-26) * claims 1-5,7-10 * | 1,13,14 | TECHNICAL FIELDS SEARCHED (IPC) C08J |
| X | US 2018/171095 A1 (LAYMAN JOHN MONCRIEF [US] ET AL) 21 June 2018 (2018-06-21) * claims 1-3,14,17-21 * | 1,13,14 | |
| X | US 4 164 484 A (KAJIMOTO HIKOKUSU [JP] ET AL) 14 August 1979 (1979-08-14) * claims; table * | 1,13,14 | |
| A | US 2004/116563 A1 (FEICK ERWIN [DE] ET AL) 17 June 2004 (2004-06-17) * claims 1,3,4 * * example 3 * | 1-15 | |

-/--

The present search report has been drawn up for all claims

| Place of search | Date of completion of the search | Examiner |
|---|---|---|
| The Hague | 25 November 2021 | Niaounakis, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 16 8649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 849 312 A1 (PARAFFINWERK WEBAU GMBH [DE]) 24 June 1998 (1998-06-24) * claim 1 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 25 November 2021 | Niaounakis, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 8649

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | | Publication date | Patent family member(s) | | Publication date |
|---|---|---|---|---|---|
| CN 101575421 | A | 11-11-2009 | NONE | | |
| US 2019390034 | A1 | 26-12-2019 | CN | 112204092 A | 08-01-2021 |
| | | | EP | 3810685 A1 | 28-04-2021 |
| | | | US | 2019390034 A1 | 26-12-2019 |
| | | | WO | 2019246018 A1 | 26-12-2019 |
| US 2019390033 | A1 | 26-12-2019 | BR | 112020026144 A2 | 16-03-2021 |
| | | | CA | 3103874 A1 | 26-12-2019 |
| | | | CN | 112154177 A | 29-12-2020 |
| | | | EP | 3810684 A1 | 28-04-2021 |
| | | | JP | 2021526576 A | 07-10-2021 |
| | | | US | 2019390033 A1 | 26-12-2019 |
| | | | WO | 2019246017 A1 | 26-12-2019 |
| US 2019390032 | A1 | 26-12-2019 | BR | 112020026143 A2 | 16-03-2021 |
| | | | CA | 3101608 A1 | 26-12-2019 |
| | | | CN | 112154178 A | 29-12-2020 |
| | | | EP | 3810683 A1 | 28-04-2021 |
| | | | JP | 2021527727 A | 14-10-2021 |
| | | | US | 2019390032 A1 | 26-12-2019 |
| | | | WO | 2019246016 A1 | 26-12-2019 |
| US 2019390031 | A1 | 26-12-2019 | BR | 112020026141 A2 | 16-03-2021 |
| | | | CA | 3101602 A1 | 26-12-2019 |
| | | | CN | 112135870 A | 25-12-2020 |
| | | | EP | 3810682 A1 | 28-04-2021 |
| | | | JP | 2021526575 A | 07-10-2021 |
| | | | US | 2019390031 A1 | 26-12-2019 |
| | | | WO | 2019246015 A1 | 26-12-2019 |
| US 2018171095 | A1 | 21-06-2018 | EP | 3339360 A1 | 27-06-2018 |
| | | | ES | 2767687 T3 | 18-06-2020 |
| | | | PL | 3339360 T3 | 30-04-2020 |
| | | | US | 2018171095 A1 | 21-06-2018 |
| US 4164484 | A | 14-08-1979 | DE | 2801522 A1 | 19-07-1979 |
| | | | FR | 2414395 A1 | 10-08-1979 |
| | | | GB | 1592212 A | 01-07-1981 |
| | | | US | 4164484 A | 14-08-1979 |
| US 2004116563 | A1 | 17-06-2004 | AU | 2629102 A | 24-06-2002 |
| | | | BR | 0116165 A | 13-01-2004 |
| | | | CN | 1481412 A | 10-03-2004 |
| | | | DE | 10062432 A1 | 20-06-2002 |
| | | | EP | 1353984 A1 | 22-10-2003 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 21 16 8649

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | Publication date | Patent family member(s) | Publication date |
|---|---|---|---|
| | | JP    2004525998 A | 26-08-2004 |
| | | US    2004116563 A1 | 17-06-2004 |
| | | WO       0248245 A1 | 20-06-2002 |
| EP 0849312    A1 | 24-06-1998 | DE      19653076 A1 | 25-06-1998 |
| | | EP       0849312 A1 | 24-06-1998 |

EPO FORM P0459

For more details about this annex : see Official Journal of the European Patent Office, No. 12/82

## REFERENCES CITED IN THE DESCRIPTION

**Patent documents cited in the description**

- EP 3339361 A1

- DE 102016015199 A1

**Non-patent literature cited in the description**

- **CHRISTIAN REICHARDT.** Solvatochromic Dyes as Solvent Polarity Indicators. *Chemical Reviews,* 1994, vol. 94 (8), 2319-2358

- **SIGNORET.** Alterations of plastic spectra in MIR and the potential impacts on identification towards recycling. *Resources, conservation and Recycling journal,* 2020, vol. 161